# EUROPEAN PATENT APPLICATION

(11) **EP 2 442 261 A1**
(43) Date of publication of application: **18.04.2012**
(21) Application number: 10184446.2
(22) Date of filing: 30.09.2010
(51) Int. Cl.: G06Q 10/00

(54) **Malleable access decision processing and ordering**

(71) Applicant: RESEARCH IN MOTION LIMITED, Waterloo, Ontario N2L 3W8 (CA); Certicom Corp., Mississauga, ON L4W 5L1 (CA)
(72) Inventor: Slavitch, Michael Nickola, Kanata Ontario K2K 3K2 (CA); Villaflor, Marcel, Waterloo Ontario N2L 0A4 (CA); Vadekar, Ashok, Mississauga Ontario L4W 5L1 (CA)
(74) Representative: Roberts, Gwilym Vaughan

(57) **Abstract**

An electronic device is provided. The electronic device comprises a memory, a processor, a rules data base stored in the memory, a context data base stored in the memory, and a rules engine stored in the memory. The rules data base comprises a plurality of access rules defined by different stakeholders. The context data base comprises contextual information comprising at least one of a relationship of the electronic device to a communication service plan owner associated with the electronic device, a work schedule associated with a user of the electronic device, a communication service account status, an entertainment service account status, and a gaming service account status. The rules engine application, when executed by the processor, grants access to a requested communication service based on applying the rules stored in the rules data base in accordance with the contextual information.

## Description

### BACKGROUND

As used herein, the terms "user equipment" and "UE" might in some cases refer to mobile devices such as mobile telephones, personal digital assistants, handheld or laptop computers, and similar devices that have telecommunications capabilities. Such a UE might consist of a device and its associated removable memory module, such as but not limited to a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UE might consist of the device itself without such a module. In other cases, the term "UE" might refer to devices that have similar capabilities but that are not transportable, such as desktop computers, set-top boxes, or network appliances. The term "UE" can also refer to any hardware or software component that can terminate a communication session for a user. Also, the terms "user equipment," "UE," "user agent," "UA," "user device" and "user node" might be used synonymously herein.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a block diagram of a communication system according to an embodiment of the disclosure.

Figure 2 is a flowchart of a method for controlling access by an electronic device according to an embodiment of the disclosure.

Figure 3 illustrates a processor and related components suitable for implementing the several embodiments of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

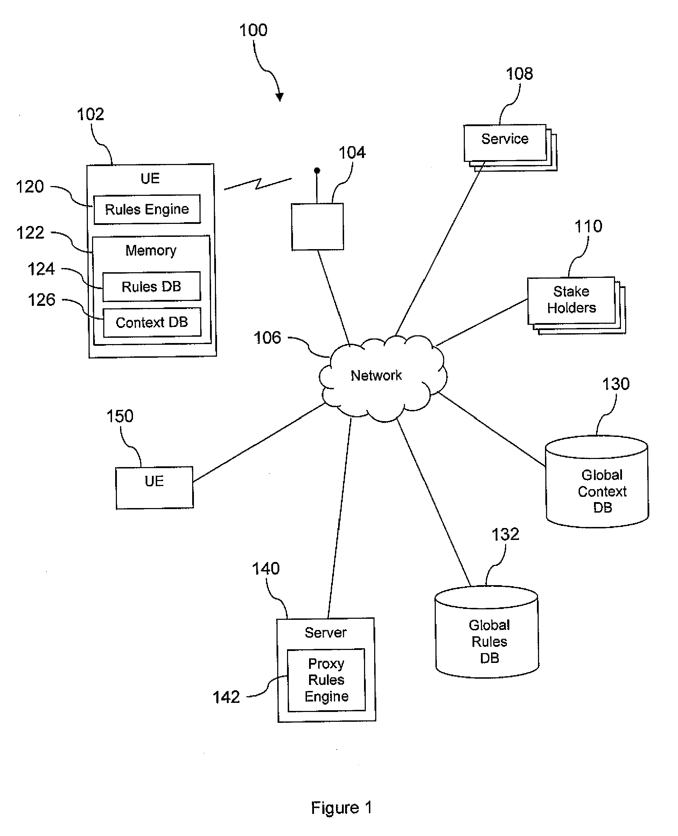

Turning now to Figure 1, a communication system 100 is described. The system 100 comprises a UE 102, a node 104, a network 106, a plurality of services 108, and a plurality of stake holders 110. While a single UE 102 and a single node 104 is shown, it is understood that there may be a larger number of UEs 102 and nodes 104 in the communication system 100. The UE 102 may be a mobile phone, a personal digital assistant (PDA), a media player, a set-top box, a gaming device, a desktop computer, a laptop computer, a tablet computer, a notebook computer, or other electronic device. For example, the UE 150 is contemplated as having a wired connection to the network 106 and may comprise a desk top computer, a set-top box, a gaming system, or other device having wired connectivity to the network 106. The node 104 may be an enhanced node B (EnB), a base transceiver station (BTS), or other wireless network access node. The network may comprise any of a public mobile land network (PMLN), a public switched telephone network (PSTN), a public data network, a private network, or a combination thereof. The services 108 may comprise any of content, content services, information update services, gaming services, streaming media content services, and other electronic services. The stake holders 110 may comprise government regulatory agencies, law enforcement agencies, educational institutions, employers, retail store owners, communication service providers, content service providers, parents, guardians, and other stake holders.

In an embodiment, the UE 102 may comprise a rules engine 120 and a memory 122. The memory may store a rules data store 124 and a context data store 126. When a user of the UE 102 attempts to access a service 108, for example when a user selects a link presented in a user interface to access streaming video content from a service 108, the rules engine 120 may make a decision to allow or disallow the access attempt. When access is allowed, the access to the subject service 108 succeeds and the desired service may be experienced by the UE 102. When the access is disallowed, a request message to access to the subject service 108 is not transmitted by the UE 102 and a request rejection message may be displayed on the user interface of the UE 102, possibly comprising an explanation of why the request has been rejected.

The rules engine 120 may decide to allow or disallow the requested access to services 108 according to a complex process based on a plurality of rules stored in the rules data store 124 and based on a plurality of contextual information stored in the context data store126. The rules data store 124 may comprise a plurality of rules created by the stake holders 110, where the rules define whether access to the services 108 is to be allowed to the UE 102. The rules may further define whether another device may access information associated with the UE 102, for example whether another device may access location information stored in the UE 102, a call history list maintained in the memory 122 of the UE 102, a history of purchases initiated from the UE 102, and/or other information stored in the UE 102 or associated with the UE 102. Different rules may be associated with different access scenarios, for example different rules may be associated with attempts to access different services 108 and/or different information associated with the UE 102. Likewise, two or more rules may be associated with an attempt to access a single service 108 or single information associated with the UE 102.

In the case that a plurality of rules stored in the rules data store 124 relate to a decision to allow access to a single service 108 or single information associated with the UE 102, the rules engine 120 determines a precedence among these rules based on contextual information stored in the context data store 126 and/or known to the UE 102. For example, a first rule created by an employer stake holder 110 disallowing access to entertainment streaming video content service 108 from the UE 102 may take precedence over other rules during a time conforming to a normal work schedule Monday through Friday but a second rule may be determined to take precedence over the first rule during a time on a weekend or during a time after the normal work schedule Monday through Friday. As another example, a third rule created by a communication service provider stake holder 110 disallowing access to a data network and/or disallowing originating a voice call (excluding a 911 type call) when a service plan account is in arrears may take precedence over the second rule at any time. The property that the decision determination performed by the rules engine 120 varies as context changes may be referred to in some contexts as malleability.

As another example, the first rule created by the employer stake holder 110 disallowing access to entertainment streaming video content service 108 from the UE 102 may take precedence over other rules while the location of the UE 102 conforms with a location of an employer work place but the second rule may take precedence when the location of the UE 102 does not conform with the location of an employer work place. In an embodiment, a reconciliation service may determine a precedence among the rules that are determined to be germane to a specific decision to allow or disallow access. The reconciliation service may be a sub-component of the rules engine 120, may be a separate component or application executing on the UE 102, or may be a service executing on a computer server accessed via the network 106.

Contextual information may comprise many kinds of information such as an age of a user of the UE 102, the location of the UE 102, the current time, disposition of the user of the UE 102 to receive calls, a work schedule of the user of the UE 102, an address book including definitions of relationships to the user of entries in the address book, an account balance status of one or more communication service accounts and/or gaming service accounts, a job title and/or employee grade of the user of the UE 102, a current condition of the network 106, and other information. The user of the UE 102 may define a current disposition to receive phone calls from anyone, phone calls only from someone stored in an address book of the UE 102, phone calls only from an employer or family, phone calls only from a family member, or phone calls only from a family member in combination with an emergency. Contextual information may identify a plurality of electronic devices proximate to the UE 102, for example UE 150 that may have connectivity to the network 106. In an embodiment, a communication service provider may employ the contextual information identifying other electronic devices proximate to the UE 102 to place a call to the user of the UE 102 not via the UE 102 but instead via the proximate electronic device, for example UE 150.

Some of the context information may be stored in the context data store 126 and some may be stored or cached in the UE 102. The context data store 126 may be initialized when the UE 102 is first brought into service. Additionally, the context data store 126 may be updated periodically and/or aperiodically via the network 106. For example, when a period of network congestion develops, a communication service provider stake holder 110 may transmit a message notifying the UE 102 of the network condition congestion, and the UE 102 may store this information in the context data store 126.

In an embodiment, a global context data store 130 is maintained external to the UE 102. The global context data store 130 may comprise context information associated with an extensive number of UEs 102. The UE 102 may periodically read context information germane to the UE 102 from the global context data store 130, for example every hour, every 15 minutes, every 5 minutes, or some other periodic interval effective to balance the objective to keep the context data store 126 on the UE 102 refreshed and the objective to avoid overloading the network 106. The UE 102 may read context information from the global data store 130 at different periodic rates at different times of day and/or on different days of the week, for example based on patterns of network bandwidth availability. The updated context information may be sent to the UE 102 as a digest or a delta that comprises only the context information that has changed and that is germane to the UE 102.

In an embodiment, the rules engine 120 may access the global context data store 130 when making access decisions. During periods of time when the global context data store 130 is inaccessible, for example when a server computer mediating access is down or when the data network is down, the rules engine 120 may make decisions based on the contents of the context data store 126 stored on the UE 102.

In an embodiment, the rules may be stored in a global rules data store 132, and the stake holders 110 may transmit their rules to the global rules data store 110. As with the context information stored in the global context data store 130, the rules that are germane to the UE 102 may be transmitted periodically to the UE 102, and the updated rule information may be sent to the UE 102 as a digest or a delta that comprises only the rules information that has changed and that is germane to the UE 102. In an embodiment, the rules engine 120 may access the global rules data store 132 when making access decisions. During periods of time when the global rules data store 132 is inaccessible, the rules engine 120 may make decisions based on the rules stored in the rules data store 124,

In an embodiment, the decision to allow or disallow access of the UE 102 to services 108 and/or to allow access to information associated with the UE 102 by another may be made by a proxy rules engine 142 executing on a server 140. The proxy rules engine 142 may receive a request message from the UE 102 requesting access to a service 108, and the proxy rules engine makes a decision to allow or disallow the requested access based on the germane rules stored in the global rules data store 132 and based on the germane context information stored in the global context data store 130. The access decision making may be delegated to the proxy rules engine 142, for example, when the UE 102 lacks the processing capacity to rapidly perform the decision making processing and/or lacks the memory capacity to support the rules data store 124 and the context data store 126. On the other hand, as UEs 102 become more capable and powerful, as is the current technology trend, it is contemplated that the decision making may increasingly be delegated to a rules engine 120 resident on the UE 102, thereby unloading the network of some extra messaging traffic. The descriptions above relating to the UE 102 apply substantially to the UE 150.

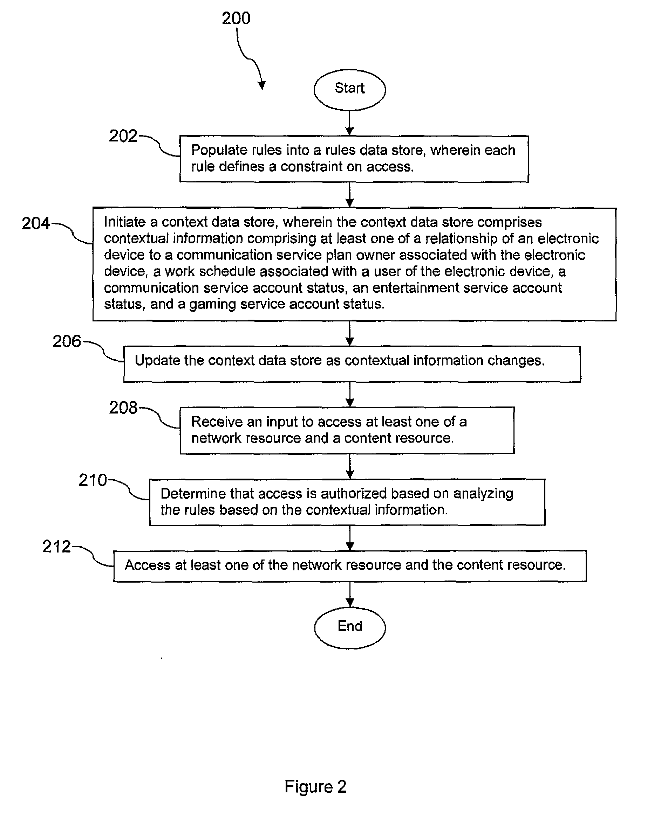

Turning now to Figure 2, a method 200 is described. At block 202, rules are populated into a rules data store, wherein each rule defines a constraint on access to a service 108 or to information on UE 102 or UE 150. The processing of block 202 may apply equally to populating the rules data store 124 on initiation of the UE 102 and to populating the global rules data store 132.

At block 204, a context data store is initiated, wherein the context data store comprises contextual information comprising at least one of a relationship of an electronic device to a communication service plan owner associated with the electronic device, a work schedule associated with a user of the electronic device, a communication service account status, an entertainment service account status, and a gaming service account status. The electronic device may be the UE 102. The account status may indicate whether a subscription fee associated with the account is up to date or whether the account is in arrears. The processing of block 204 may apply equally to initiating the context data store 126 on initiation of the UE 102 and to populating the global context data store 130. The present disclosure contemplates other contextual information may be stored in the context data store 126 and/or the global context data store 130. Other contextual information may comprise an age of the user of the UEs 102, a network congestion condition, information identifying the location of UEs 102, schedules of users of UEs 102, employment information about users of UEs 102, family relationships of users of UEs 102, and other information.

At block 206, the context data store is updated as contextual information changes. The processing of block 206 may apply to either or both of the global context data store 130 and the context data store 126. For example, a data network service provider may transmit network congestion information to be stored in the global context data store 130. The server 140 or another server may create a digest of the changed context information stored in the global context data store 130 and transmit a message containing the digest of the changed context information to the UE 102 for storing in the context data store 126.

At block 208, an input to access at least one of a network resource and a content resource is received. For example, the user of the UE 102 transmits a request to originate a phone call or transmits a request to receive a streamed video content, and the server 140 or another server receives the request. At block 210, the proxy rules engine 142 determines that the requested access is authorized, based on analyzing the rules in the global rules data store 132, based on the context information stored in the global context data store 130. In an embodiment, the rules engine 120 executing on the UE 102 performs this authorization, in which case block 208 is performed by the rules engine 120.

At block 212, at least one of the network resource and the content resource is accessed. For example, the server 140 or other server sends a request granted reply to the UE 102, and the UE 102 one of originates the phone call or accesses the requested content.

In an embodiment, the rules based processes for authorizing access to resources may be performed by a number of different nodes in the series of providing access to the services. For example, the rules engine 120 executing on the UE 102 may make an access authorization decision based on whether the current time is during a normal work day or whether the current location is an employer work site. If authorized, the request for content may be transmitted by the UE 102. The service provider node that received the request may execute a corresponding rules engine to determine whether the request for content issued by the UE 102 may be authorized to transit the network 106 using the service provider's services. If authorized, the request for content maybe transmitted by the service provider to the service 108, for example a streaming media content service. The streaming media content service may execute a corresponding rules engine to determine whether the request for streaming media content may be fulfilled. In an exemplary case, a content provider subscription fee account may be paid, but the request for content may identify a video deemed to contain violent scenes and the request may be denied because the user associated with the UE 102 is too young.

The malleable access determination system that has been described herein promotes dynamically adapting to changing situations. Rules may be defined that themselves take account of contextual information. For example, a rule created by a hospital wireless network administrator about accessing the hospital wireless network may make access authorization contingent on contextual information related to the health of the hospital wireless network. For example, the rule may authorize any UE 102 associated with a registered patient to access the wireless network, provided that the wireless network has been in service for at least 15 minutes. Thus, after a crash and reboot of the hospital wireless network, patients may be excluded from accessing the wireless network for an initial period of time (i.e., 15 minutes) to allow higher priority devices, such as patient monitoring equipment and communication devices of medical staff, to first rejoin the hospital wireless network and to receive any pending messages.

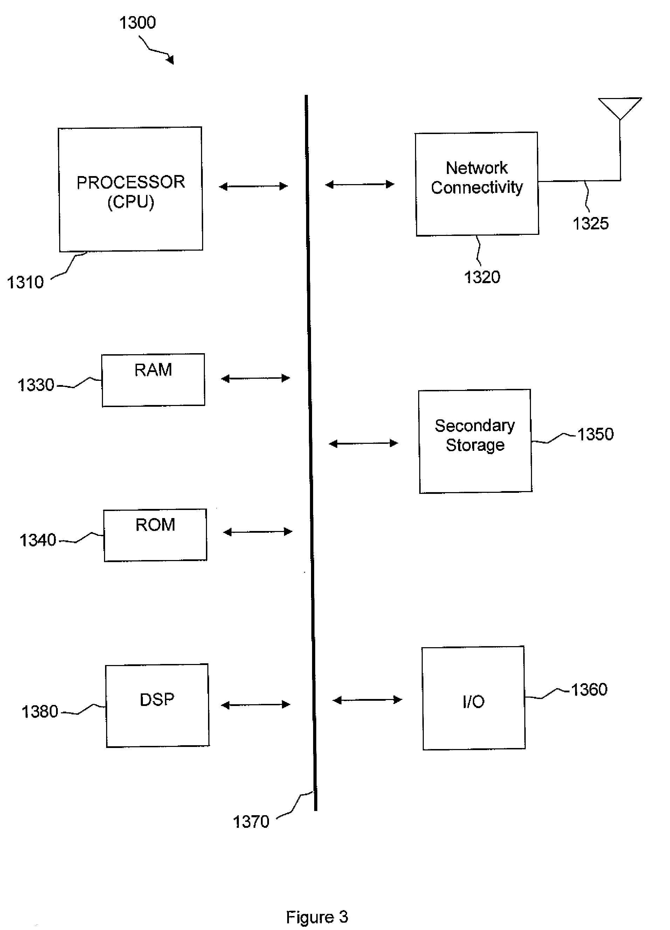

The access node, UE, and other components described above might include a processing component that is capable of executing instructions related to the actions described above. Figure 3 illustrates an example of a system 1300 that includes a processing component 1310 suitable for implementing one or more embodiments disclosed herein. For example, the UE 102 may be implemented substantially similar to the system 1300. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information. The network connectivity devices 1320 might also include one or more transceiver components 1325 capable of transmitting and/or receiving data wirelessly.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the I/O devices 1360 instead of or in addition to being a component of the network connectivity devices 1320.

In an embodiment, an electronic device is provided. The electronic device comprises a memory, a processor, a rules data base stored in the memory, a context data base stored in the memory, and a rules engine stored in the memory. The rules data base comprises at least one of a first access rule defined by a government, a second access rule defined by an airline, a third access rule defined by a medical facility, a fourth access rule defined by a service plan owner associated with the electronic device, a fifth access rule defined by a communication service provider, and a sixth access rule defined by a content provider. The context data base comprises contextual information comprising at least one of a relationship of the electronic device to a communication service plan owner associated with the electronic device, a work schedule associated with a user of the electronic device, a communication service account status, an entertainment service account status, and a gaming service account status. The rules engine application, when executed by the processor, grants access to a requested communication service based on applying the rules stored in the rules data base in accordance with the contextual information. In an embodiment, the electronic device may be a UE.

In an embodiment, a system is provided. The system comprises a rules data base, a context data base, a computer system, and a rules engine application. The rules data base comprises at least one of a first access rule defined by a government, a second access rule defined by an airline, a third access rule defined by a medical facility, a fourth access rule defined by a service plan owner associated with the electronic device, a fifth access rule defined by a communication service provider, and a sixth access rule defined by a content provider. The context data base comprises contextual information comprising at least one of a relationship of the electronic device to a communication service plan owner associated with the electronic device, a work schedule associated with a user of the electronic device, a communication service account status, an entertainment service account status, and a gaming service account status. The rules engine application, when executed by the computer system, receives a request from an electronic device to access a communication service, applies the rules stored in the rules data base in accordance with the contextual information to determine that access by the electronic device to the communication service is allowed, and sends a reply to the electronic device granting access to the communication service.

In some embodiments, the rules engine applies the rules based at least in part on a current time or a current location of the electronic device. The current location of the electronic device is stored as contextual information in the context data base. The rules data base further comprises a seventh rule defined by a service plan owner associated with an other electronic device, wherein the seventh rule defines what conditions a phone call may be routed to the other electronic device.

In an embodiment, a method of controlling access by an electronic device is provided. In an embodiment, the electronic device may be a UE. The method comprises populating rules into a rules data base of the electronic device, wherein each rule defines a constraint on access. The method further comprise initiating a context data base of the electronic device, wherein the context data base comprises contextual information comprising at least one of a relationship of the electronic device to a communication service plan owner associated with the electronic device, a work schedule associated with a user of the electronic device, a communication service account status, an entertainment service account status, and a gaming service account status. The method further comprises updating the context data base as contextual information changes, receiving an input to access at least one of a network resource and a content resource, determining that access is authorized based on analyzing the rules based on the contextual information, and accessing at least one of the network resource and the content resource.

In an embodiment, a method of controlling access by a first electronic device is provided. The method comprises populating rules into a rules data base, wherein each rule defines a constraint on access. The method further comprises initiating a context data base, wherein the context data base comprises contextual information comprising at least one of a relationship of an electronic device to a communication service plan owner associated with the first electronic device, a work schedule associated with a user of the first electronic device, a communication service account status, an entertainment service account status, and a gaming service account status. The method further comprises updating the context data base as contextual information changes, receiving a request to access at least one of a network resource and a content resource, determining that access is authorized based on analyzing the rules based on the contextual information, and transmitting permission to access at least one of the network resource and the content resource.

In some embodiments, the method further comprises: receiving a subscribe message, wherein the subscribe message requests to be informed of an update to at least some of the context data base; and sending an update notification message to the first electronic device in response to receiving the subscribe message and in response to an update to the context data base. In some cases, the content resource is one of a content server, a media server, or a gaming server. In some cases, the network resource is a communication link, and content resource is a location of a second electronic device.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. An electronic device, comprising:
a memory;
a processor;
a rules data base stored in the memory, wherein the rules data base comprises at
least one of a first access rule defined by a government, a second access rule defined by an airline, a third access rule defined by a medical facility, a fourth access rule defined by a service plan owner associated with the electronic device, a fifth access rule defined by a communication service provider, and a sixth access rule defined by a content provider;
a context data base stored in the memory, wherein the context data base comprises
contextual information comprising at least one of a relationship of the electronic device to a communication service plan owner associated with the electronic device, a work schedule associated with a user of the electronic device, a communication service account status, an entertainment service account status, and a gaming service account status;
a rules engine application stored in the memory that, when executed by the
processor, grants access to a requested communication service based on applying the rules stored in the rules data base in accordance with the contextual information.

2. The electronic device of claim 1, wherein the electronic device is one of a mobile phone, a personal digital assistant (PDA), and a media player.

3. The electronic device of claim 1, wherein the electronic device is one of a gaming computer, a desktop computer, a laptop computer, a tablet computer, and a notebook computer.

4. The electronic device of claim 1, wherein the rules engine application grants access to the requested communication service based at least in part on one of a current time and a current location of the electronic device.

5. The electronic device of claim 1, wherein the requested communication service comprises at least one of access to a media server, access to a content server, and placing a phone call.

6. A method of controlling access by an electronic device, comprising:
populating rules into a rules data base of the electronic device, wherein each rule
defines a constraint on access;
initiating a context data base of the electronic device, wherein the context data base
comprises contextual information comprising at least one of a relationship of the electronic device to a communication service plan owner associated with the electronic device, a work schedule associated with a user of the electronic device, a communication service account status, an entertainment service account status, and a gaming service account status;
updating the context data base as contextual information changes;
receiving an input to access at least one of a network resource and a content
resource;
determining that access is authorized based on analyzing the rules based on the
contextual information; and
accessing at least one of the network resource and the content resource.

7. The method of claim 6, wherein the electronic device is one of a mobile phone, a personal digital assistant (PDA), and a media player.

8. The method of claim 6, wherein determining that access is authorized is further based on analyzing the rules based on a current time.

9. The method of claim 8, wherein determining that access is authorized is further based on analyzing the rules based on a current location of the electronic device.

10. The method of claim 6, further comprising receiving a context update message comprising a modification of information stored in the context data base.

11. The method of claim 10, further comprising:
receiving a context change notification message; and
in response to receiving the context change notification message, sending a context
update request message.
